# EUROPEAN PATENT APPLICATION

(11) **EP 4 250 537 A1**
(43) Date of publication of application: **27.09.2023**
(21) Application number: 21894389.2
(22) Date of filing: 15.10.2021
(51) Int. Cl.: H02K 1/276

(54) **ROTATING ELECTRIC MACHINE ROTOR AND ROTATING ELECTRIC MACHINE**

(30) Priority: 17.11.2020 JP 2020191057
(71) Applicant: KABUSHIKI KAISHA TOSHIBA, Minato-ku Tokyo 105-0023 (JP); Toshiba Infrastructure Systems & Solutions Corporation, Kawasaki-shi, Kanagawa 212-0013 (JP)
(72) Inventor: SASAKI, Naoya, Kawasaki-shi, Kanagawa 212-0013 (JP); SHINKAWA, Naoto, Kawasaki-shi, Kanagawa 212-0013 (JP); MATSUBARA, Masakatsu, Kawasaki-shi, Kanagawa 212-0013 (JP)
(74) Representative: AWA Sweden AB
(86) International application number: PCT/JP2021/038190
(87) International publication number: WO 2022/107515

(57) **Abstract**

This rotating electric machine rotor comprises a shaft rotating about the center axis line, a rotor core coaxially fixed to the shaft, and a polyhedral permanent magnet housed in a slot portion passing through the rotor core in a direction along the center axis line. The permanent magnet has a face portion through which adjacent magnets can face and contact each other in the slot portion in which the permanent magnet is housed. The face portion is provided with a surface layer portion having an electric resistance value that is two or more times the electric resistance value of the face portion of the permanent magnet.

## Description

### Technical Field

Embodiments of the present invention relate to a rotating electric machine rotor and a rotating electric machine comprising the rotor.

### Background Art

In recent years, permanent magnets of a high magnetic energy product have been developed by remarkable research and development of permanent magnets. Permanent magnet type rotating electric machines using such permanent magnets have been applied as electric motors or generators for trains and automobiles. In general, a permanent magnet type rotating electric machine comprises a cylindrical stator and a columnar rotor that is rotatably supported inside the stator.

In such a permanent magnet type rotating electric machine, the permanent magnet is housed in, for example, a hole portion (slot) provided in the rotor core and is fixed to the rotor core with an adhesive or the like. In a permanent magnet, an eddy current flows in the magnet by changing the magnetic flux passing through the magnet itself. The eddy current is a factor that causes a loss (eddy current loss) such as torque of a rotating electric machine. Since the amount of magnetic flux of a permanent magnet is proportional to the volume, for example, when a permanent magnet is divided into a plurality of pieces in a direction along the center axis of the rotor shaft, the eddy current flowing through the divided magnets can be reduced and the eddy current loss can be suppressed.

In contrast, when a plurality of permanent magnets are mixed in one hole of the rotor core, the effect of reducing the eddy current loss cannot be sufficiently achieved if contact parts between adjacent magnets in the hole are not properly insulated.

### Citation List

### Patent Literatures

Patent Literature 1: JP 4962870 B
Patent Literature 2: JP H11-252833 A

### Summary of Invention

### Technical Problem

The present invention has been accomplished based on this, and aims to provide a rotor and a rotating electric machine in which even when a plurality of permanent magnets are mixed in a hole portion, contact portions of adjacent magnets in the hole portion can be approximately isolated.

### Solution to Problem

A rotating electric machine rotor according to the embodiments comprises a shaft rotating about a center axis, a rotor core coaxially fixed to the shaft, and a polyhedral permanent magnet, a plurality of polyhedral permanent magnets being housed in each hole portion that penetrates the rotor core in a direction along the center axis. The permanent magnet has a face portion at which adjacent magnets are able to be in contact with each other in the hole portion in which the permanent magnets are housed. The face portion comprises a surface layer portion having an electric resistance value which is twice or more as large as an electric resistance value of the face portion of the permanent magnet.

### Brief Description of Drawings

FIG. 1 is a perspective view showing a schematic configuration of a rotating electric machine according to a first embodiment.
FIG. 2 is a perspective view showing a schematic configuration of a permanent magnet which a rotor of the rotating electric machine according to the first embodiment comprises.
FIG. 3 is a view schematically showing an aspect of the permanent magnet housed in a hole portion of the rotor of the rotating electric machine according to the first embodiment.
FIG. 4 is a view schematically showing a coating film formed on the permanent magnet which the rotor of the rotating electric machine according to the first embodiment comprises.
FIG. 5 is a view schematically showing another example of the coating film formed on the permanent magnet which the rotor of the rotating electric machine according to the first embodiment comprises.
FIG. 6 is a graph showing a relationship between an electric resistance value of the coating film and the reduction in an eddy current loss in the permanent magnet which the rotor of the rotating electric machine according to the first embodiment comprises.
FIG. 7 is a perspective view showing a schematic configuration of a permanent magnet which a rotor of a rotating electric machine according to a second embodiment comprises.
FIG. 8 is a view schematically showing an aspect of the permanent magnet housed in a hole portion of the rotor of the rotating electric machine according to the second embodiment.
FIG. 9 is a view schematically showing a coating film formed on the permanent magnet which the rotor of the rotating electric machine according to the second embodiment comprises.
FIG. 10 is a view schematically showing another example of the coating film formed on the permanent magnet which the rotor of the rotating electric machine according to the second embodiment comprises.

### Mode for Carrying Out the Invention

Embodiments will be described hereinafter with reference to the accompanying drawings. Structures common in embodiments are denoted by the same reference numbers or symbols, duplicate explanations being omitted. Each figure is an exemplary diagram of an embodiment to aid understanding of the embodiment. The shapes, dimensions or ratios in the drawings may differ from those of the actual device, and may be appropriately changed in light of the subsequent explanation and the known art.

### (First Embodiment)

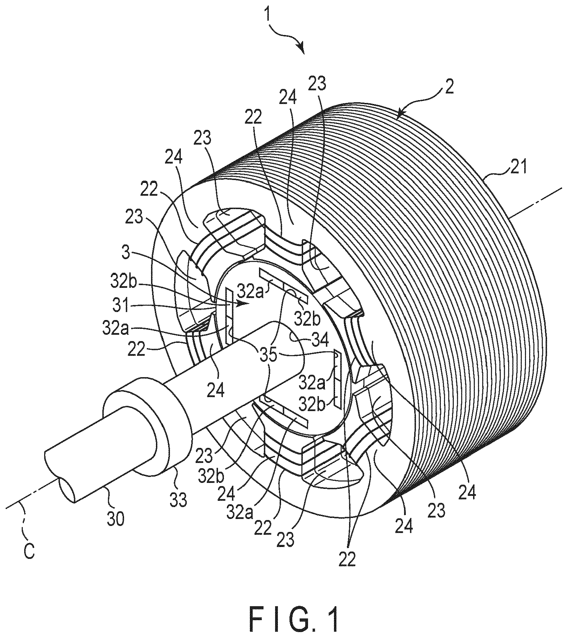

FIG. 1 is a perspective view showing a schematic configuration of a rotating electric machine 1 according to a first embodiment. The rotating electric machine 1 is applied as a main motor, a drive motor, or a generator in, for example, a railroad car, a hybrid vehicle (HEV) or an electric vehicle (EV). However, the application of the rotating electric machine 1 is not limited to these. In the following description, a direction along an axis (center axis) C of a rotation axis (shaft) 30 in the rotating electric machine 1 is referred to as an axial direction, and a circumference of the center axis C is defined as the circumferential direction.

As shown in FIG. 1, the rotating electric machine 1 is in an inner rotor type, and comprises a cylindrical stator (stator) 2 supported by a fixed frame (not shown) and a rotor (rotor) 3 coaxially supported with the center axis C to be rotatable about the center axis C inside the stator 2.

The stator 2 comprises a cylindrical stator core 21 and a wire (coil) 22 wound around the stator core 21. The stator core 21 is constituted by stacking a large number of annular electromagnetic steel sheets of a magnetic material, for example, silicon steel or the like in a concentric manner. A plurality of slots 23 are formed in an inner circumferential portion of the stator core 21. The plurality of slots 23 are arranged at regular intervals in the circumferential direction. Each of the slots 23 opens to the inner circumferential surface of the stator core 21 and extends radially from the inner circumferential surface. In addition, each of the slots 23 extends over the entire length of the stator core 21 in the direction of the center axis C. The inner circumferential portion of the stator core 21 constitutes a plurality of teeth 24 opposed to the outer circumferential surface of the rotor 3, by forming the plurality of slots 23. The wire 22 is embedded in the plurality of slots 23 and wound around each of the teeth 24. A predetermined flux linkage is formed on the stator 2, i.e., the teeth 24 by urging a current to flow to the wire 22.

The rotor 3 comprises a cylindrical shaft (rotating shaft) 30, a cylindrical rotor core 31 coaxially fixed to the shaft 30, and a plurality of permanent magnets 32a and 32b arranged on the rotor core 31. The shaft 30 is supported to be rotatable about the center axis C by a bearing 33. The rotor 3 is arranged concentrically with the stator 2 with a slight gap (air gap) inside the stator 2. In other words, the outer circumferential surface of the rotor core 31 is opposed to the inner circumferential surface of the stator 2, i.e., the teeth 24 with a slight gap. The rotor core 31 includes an inner hole 34 formed concentrically with the shaft 30. The shaft 30 is inserted and fitted into the inner hole 34 to extend concentrically with the rotor core 31. The rotor core 31 is formed by stacking a large number of annular electromagnetic steel plates formed of a magnetic material, for example, silicon steel, in a concentric manner.

In the example shown in FIG. 1, a plurality of magnetic poles, as an example, four poles are provided at the rotor 3. The rotor core 31 includes hole portions (slots) 35 formed in response to these magnetic poles. In the example shown in FIG. 1, four hole portions 35 are arranged and spaced apart at substantially regular intervals in the circumferential direction to penetrate the rotor core 31 over the entire length in the axial direction. A plurality of permanent magnets 32a and 32b are mixed and housed in each of the hole portions 35 and are fixed with an adhesive or the like. As a result, a plurality of permanent magnets 32a and 32b are embedded for each magnetic pole, in the rotor core 31. In the example shown in FIG. 1, two permanent magnets 32a and 32b are housed and mixed in each hole portion 35. However, three or more permanent magnets may be housed in one hole portion 35.

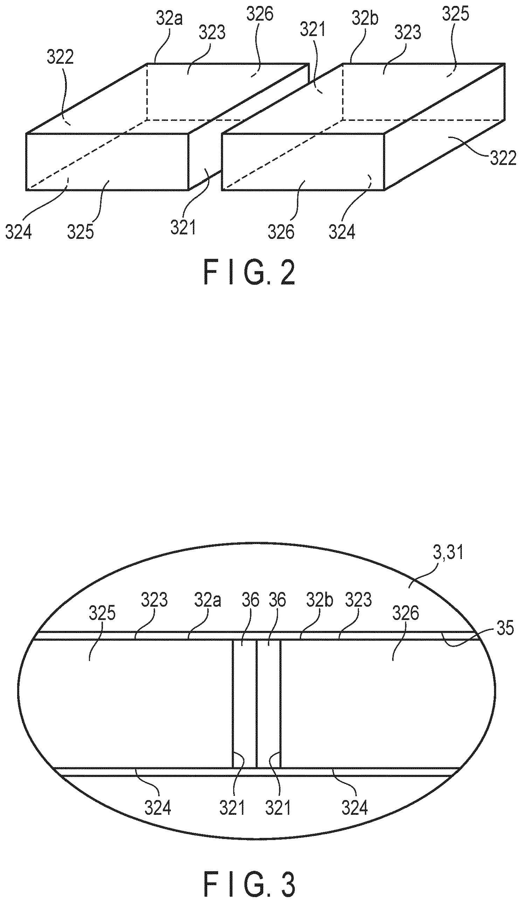

FIG. 2 is a perspective view showing a schematic configuration of two permanent magnets 32a and 32b (first permanent magnet 32a and second permanent magnet 32b) mixed in one hole portion 35. In the example shown in FIG. 2, the first permanent magnet 32a and the second permanent magnet 32b are polyhedrons, more specifically, flat rectangular parallelepiped hexahedrons. Such a hexahedron may be chamfered at any corner of the rectangular parallelepiped. In other words, the hexahedron includes a form having six faces excluding the chamfers applied to each side portion, i.e., a form of a polyhedron in which each side portion of the hexahedron is chamfered.

The first permanent magnet 32a and the second permanent magnet 32b are permanent magnets having the magnetic performances equivalent to each other, and have substantially the same form. For example, each of these permanent magnets 32a and 32b has the magnetic performance equivalent to that of one magnet body obtained by dividing one permanent magnet appropriately housed in the hole portion 35 into approximately two equal parts in the direction along the center axis C, and each of them has a volume (volume) obtained by dividing the volume of the hole portion 35 into approximately two equal parts in a similar manner. A contour shape of the cross section of the two permanent magnets 32a and 32b in the state of being housed in the hole portion 35 is substantially similar to the cross-sectional shape of the hole portion 35 (as an example, a rectangular shape) (see FIG. 1). The cross section mentioned here is a cross section on a plane orthogonal to the center axis C.

Each of the first permanent magnet 32a and the second permanent magnet 32b has six face portions, i.e., a first face portion 321 to a sixth face portion 326. Each of these face portions 321 to 326 is subjected to, for example, surface treatment by polishing.

The first face portion 321 and the second face portion 322 are face portions that can be brought into contact with each other with the magnets housed in the hole portion 35 and adjacent to each other, of the face portions of the hexahedron parallel to the center axis C, and are one face portion and the other face portion paired in parallel. In other words, the first permanent magnet 32a and the second permanent magnet 32b are housed in the hole portion 35 by bringing the mutual first face portions 321 and 321 or second face portions 322 and 322 into contact with each other along the center axis C.

The third face portion 323 and the fourth face portion 324 are face portions parallel to the center axis C and orthogonal to the first and second face portions 321 and 322, and face portions to which, for example, an adhesive is applied and which are fixed to the hole portion 35. In addition, the magnetization directions of the permanent magnets 32a and 32b are directions orthogonal to the third and fourth face portions 323 and 324, and these face portions 323 and 324 correspond to the magnetic pole faces of the permanent magnets 32a and 32b. Therefore, the first and second face portions 321 and 322 correspond to the face portions orthogonal to the magnetic pole plane, of the face portions parallel to the center axis C, i.e., face portions parallel to the center axis C and extending parallel to the magnetization direction.

The fifth face portion 325 and the sixth face portion 326 are face portions orthogonal to the center axis C and located at both ends in the direction along the center axis C with the permanent magnets 32a and 32b housed in the hole portion 35.

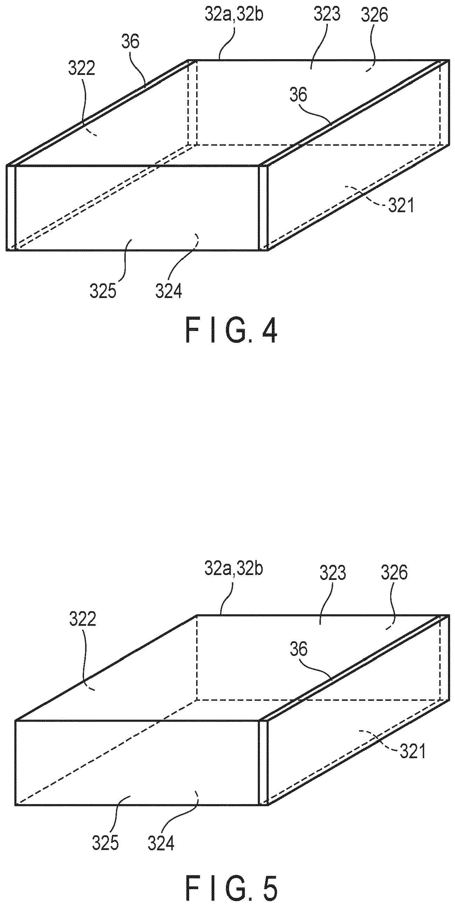

FIG. 3 schematically shows aspects of the first permanent magnet 32a and the second permanent magnet 32b housed in the hole portion 35, from the direction of the center axis C. As shown in FIG. 3 and FIG. 4, the first and second face portions 321 and 322 of the first permanent magnet 32a, and the first and second face portions 321 and 322 of the second permanent magnet 32b comprise surface layer portions 36 having predetermined electric resistance values, respectively. The surface layer portion 36 has an electric resistance value (Rt) which is twice or more as large as the electric resistance value (Rm) of these face portions 321 and 322 (Rt≥2×Rm), and extends over the entire surface of each of the face portions 321 and 322. The insulating properties of the first face portion 321 and the second face portion 322 are thereby enhanced. As shown in FIG. 4, in the embodiment, a coating film (hereinafter referred to as a coating film 36) is formed on each of surfaces of the first face portion 321 and the second face portion 322 as the surface layer portion 36. In other words, in the example shown in FIG. 4, the coating films 36 are formed on both the first face portion 321 and the second face portion 322 paired in each of the permanent magnets 32a and 32b, respectively.

However, the coating film 36 may be formed on only one of the first face portion 321 and the second face portion 322 paired in each of the permanent magnets 32a and 32b. FIG. 5 shows, as an example, a form in which the coating film 36 is formed only on the first face portion 321. In the example shown in FIG. 5, the decrease in the magnet volume due to the coating film 36 with respect to the volume of the hole portion 35 can easily be suppressed as compared with the example shown in FIG. 4. In this case, the coating films 36 of the magnets need only to be in contact with each other in the state of being housed in the hole portion 35. Alternatively, as the embodiment, both the permanent magnets 32a and 32b in the form shown in FIG. 4 and the form shown in FIG. 5 may be mixed and applied but, in this case, too, the coating films 36 of the magnets need only to be in contact with each other in the state of being housed in the hole portion 35.

The method of forming the coating films 36 is not particularly limited, but can be formed by, for example, applying a predetermined paint to the entire surfaces of the first face portion 321 and the second face portion 322. As the applying method, any method such as brush coating, spray coating, waste coating, and dipping can be applied. The thickness of the coating film 36 changes depending on the properties of material of the paint, for example, the degree of shrinkage after the volatile components are removed, the viscosity, and the like, but may be the thickness which minimizes the decrease in the magnet volume with respect to the volume of the hole portion 35.

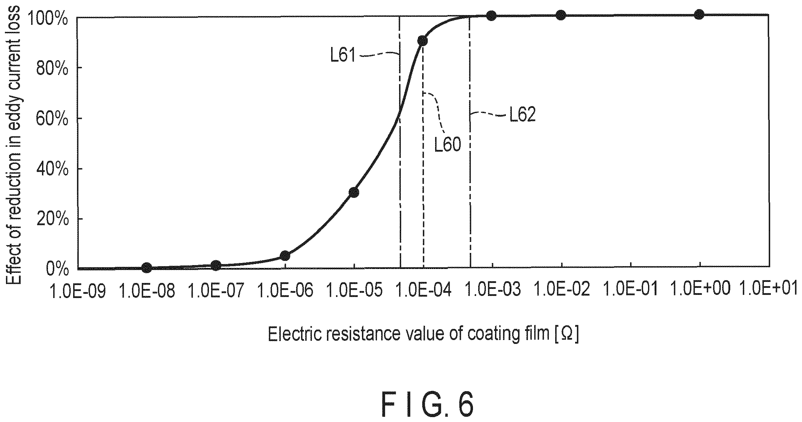

Advantages of such a coating film 36 will be described. FIG. 6 shows, as an example, a relationship between the electric resistance value of the coating film 36 formed on the first face portion 321 and the reduction in eddy current loss in the permanent magnets 32a and 32b. The horizontal axis of FIG. 6 indicates the electric resistance value of the coating film 36. The vertical axis of FIG. 6 indicates the effect of reduction in eddy current loss, and the eddy current loss is smaller and the reduction effect is higher as the effect becomes closer to 100%, and the eddy current loss is larger and the reduction effect is lower as the effect becomes closer to 0%. For example, when the effect of reduction in eddy current loss is 0%, this means that an eddy current loss equivalent to that of a permanent magnet (hereinafter referred to as a comparative magnet) having a volume in which the two permanent magnets 32a and 32b are combined occurs at the magnets. The electric resistance value in a face portion corresponding to the first face portion 321 of the comparative magnet is equivalent to the electric resistance value in the first face portion 321 of the permanent magnets 32a and 32b. In this case, the permanent magnets 32a and 32b and the comparative magnet are constituted by containing, for example, iron (Fe), cobalt (Co), yttrium (Y), lanthanum (La), cerium (Ce), praseodymium (Pr), neodymium (Nd), samarium (Sm), and the like in a part or all parts of raw materials.

In FIG. 6, a one-dot chain line (L61) indicates the electric resistance value (Rm) of the first face portion 321, and a broken line (L60) indicates the electric resistance value (2×Rm) which is twice as large as the electric resistance value of the first face portion 321. As shown in FIG. 6, when the electric resistance value of the coating film 36 is approximately equal to the electric resistance value of the first face portion 321 (Rt≒Rm), the effect of reduction in eddy current loss in the permanent magnets 32a and 32b is approximately 600. In contrast, when the electric resistance value of the coating film 36 is twice or more as large as the electric resistance value of the first face portion 321 (Rt≥2×Rm), the effect of reduction in eddy current loss in the permanent magnets 32a and 32b is increased to approximately 90%.

As described above, in the embodiment, the electric resistance value of the coating film 36 is set to be twice or more as large as the electric resistance value of the first face portion 321 (Rt≥2×Rm). For this reason, according to the embodiment, the eddy current loss which occurs in the two permanent magnets 32a and 32b can be suppressed as compared with the comparative magnet.

Furthermore, in FIG. 6, a two-dot chain line (L62) indicates an electric resistance value ten times as large as the electric resistance value of the first face portion 321 (10×Rm). According to this, when the electric resistance value of the coating film 36 is set to ten times or more as large as the electric resistance value of the first face portion 321 (Rt≥10×Rm) , the effect of reduction in eddy current loss in the permanent magnets 32a and 32b can be increased to approximately 100%. Therefore, in this case, the eddy current loss which occurs in the two permanent magnets 32a and 32b can be further suppressed as compared with the comparative magnet.

The material of the coating film 36 may be a material having an electric resistance value which enables the effect of reduction in eddy current loss in the permanent magnets 32a and 32b to be increased to approximately 90%, i.e., an electric resistance value which is twice or more as large as the electric resistance value of the face portion (as an example, the first face portion 321) where the coating film 36 is formed.

For example, in the embodiment, a material containing germanium (Ge) or silicon (Si) is applied as the material of the coating film 36. The electric resistance value of the coating film 36 formed of germanium (Ge) is approximately 1.00E-01 [Q], and the electric resistance value of the coating film 36 formed of silicon (Si) exceeds 1.00E + 01 [Q]. The both electric resistance values (Rt) exceed the electric resistance value (10×Rm) ten times as large as the electric resistance value of the first face portion 321 indicated by the two-dot chain line (L62) in FIG. 6 (Rt≥10×Rm). Therefore, according to the coating film 36 formed of these as its material, the effect of reduction in eddy current loss in the permanent magnets 32a and 32b can be increased to 90% or more, and further to approximately 100%.

However, the material of the coating film 36 is not limited to these, but may be, for example, an oxide containing germanium (Ge) or silicon (Si), a predetermined organic substance having the effect of reduction in eddy current loss by approximately 90%, or the like.

As the volume of the permanent magnets 32a and 32b is smaller, controlling the thickness of the coating film 36 becomes more difficult. In the embodiment, the effect of reduction in eddy current loss can be obtained without strictly controlling the thickness by applying a material having an electric resistance value which is twice or more as large as the electric resistance value of the face portion (as an example, first face portion 321) on which the coating film 36 is formed, for example, germanium (Ge) or silicon (Si), as the material of the coating film 36.

In addition, in the embodiment, the coating films 36 are formed on both the first face portion 321 and the second face portion 322 which are paired parallel to each of the permanent magnets 32a and 32b. Therefore, the coating films 36 of the magnets can be brought into contact with each other regardless of the orientation of the permanent magnets 32a and 32b when inserted into the hole portion 35. For this reason, both the improvement of work efficiency and the reduction in eddy current loss can be achieved. Incidentally, the third to sixth face portions 323 to 326 of each of the permanent magnets 32a and 32b do not have coating films. For this reason, it is possible to suppress the reduction in magnet volume with respect to the volume of the hole portion 35, which is caused by the coating film 36, while suppressing the costs of the permanent magnets 32a and 32b due to the formation of the coating film 36. However, if the coating film 36 is formed on at least one of the first face portion 321 or the second face portion 322, a coating film equivalent to the coating film 36 may be formed on all or a part of the third to sixth face portions 323 to 326.

Thus, according to the embodiment, even when the plurality of permanent magnets 32a and 32b are mixed in one hole portion 35, face portions (as an example, the first face portions 321) which are the contact portions of the adjacent magnets in the hole portion 35 can be appropriately insulated. Therefore, the eddy current generated in the permanent magnets 32a and 32b can be suppressed and the torque characteristics of the rotating electric machine 1 and the like can be improved.

In the above-described embodiment, the two permanent magnets 32a and 32b in which one permanent magnet appropriately housed in the hole portion 35 is substantially divided into two parts in the direction along the center axis C, are mixed in one hole portion 35. The division aspect of the permanent magnet capable of reducing the eddy current and suppressing the eddy current loss is not limited to such division in the direction along the center axis C. For example, even in the aspect of dividing in the direction intersecting the center axis C or, as an example, the direction orthogonal to the center axis C, the same effect of suppressing the eddy current loss as that in the above-described embodiment can be obtained. An embodiment using a permanent magnet thus divided in the direction orthogonal to the center axis C will be described below as a second embodiment.

### (Second Embodiment)

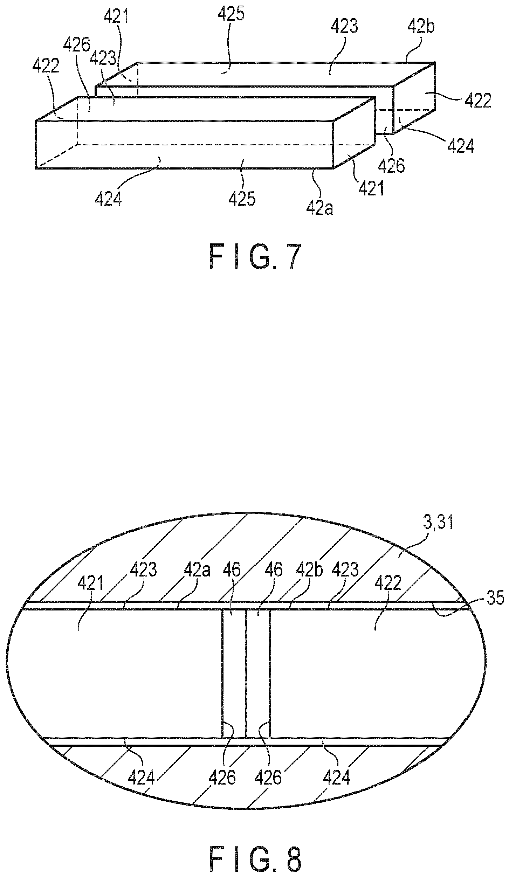

FIG. 7 to FIG. 10 show a schematic configuration of a permanent magnet according to the second embodiment. In the second embodiment, a configuration of a rotating electric machine other than the permanent magnet is the same as that of the rotating electric machine 1 of the first embodiment shown in FIG. 1. Therefore, for each component of the rotating electric machine other than the permanent magnet according to the second embodiment, the components of the rotating electric machine 1 shown in FIG. 1 will be referred to, the same reference numerals will be used, and their description will be omitted.

FIG. 7 is a perspective view showing a schematic configuration of two permanent magnets 42a and 42b (third permanent magnet 42a and fourth permanent magnet 42b) mixed in one hole portion 35. In the example shown in FIG. 7, the third permanent magnet 42a and the fourth permanent magnet 42b are polyhedrons, more specifically, flat rectangular parallelepiped hexahedrons. Such a hexahedron may be chamfered at any corner of the rectangular parallelepiped. In other words, the hexahedron includes a form having six faces excluding the chamfers applied to each side portion, i.e., a form of a polyhedron in which each side portion of the hexahedron is chamfered.

The third permanent magnet 42a and the fourth permanent magnet 42b are permanent magnets having the magnetic performances equivalent to each other, and have substantially the same form. For example, each of these permanent magnets 42a and 42b has the magnetic performance equivalent to that of one magnet body obtained by dividing one permanent magnet appropriately housed in the hole portion 35 into approximately two equal parts in the direction along the center axis C, and each of them has a volume (volume) obtained by dividing the volume of the hole portion 35 into approximately two equal parts in a similar manner. The contour shape of the cross section of each of the permanent magnets 42a and 42b in the state of being housed in the hole portion 35 is substantially similar to the shape of the cross section of the hole portion 35 (as an example, a rectangular shape) (see FIG. 1). The cross section mentioned here is a cross section on a plane orthogonal to the center axis C.

Each of the third permanent magnet 42a and the fourth permanent magnet 42b has six face portions, i.e., first face portions 421 to sixth face portions 426. Each of these face portions 421 to 426 is subjected to, for example, surface treatment by polishing. The arrangement of each of the face portions 421 to 426 of each of the permanent magnets 42a and 42b is the same as that of the permanent magnets 32a and 32b.

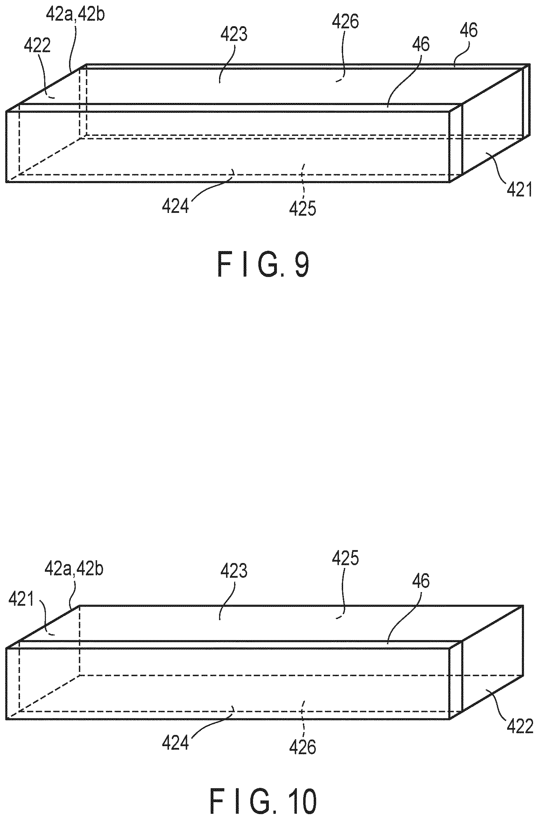

FIG. 8 schematically shows aspects of the third permanent magnet 42a and the fourth permanent magnet 42b housed in the hole portion 35 from the direction orthogonal to the direction of the center axis C. As shown in FIG. 8 and FIG. 9, the fifth and sixth face portions 425 and 426 of the third permanent magnet 42a, and the fifth and sixth face portions 425 and 426 of the fourth permanent magnet 42b comprise surface layer portions 46 having predetermined electric resistance values, respectively, in the second embodiment.

The fifth face portion 425 and the sixth face portion 426 are face portions that can be brought into contact with each other with the magnets housed in the hole portion 35 and adjacent to each other, and are one face portion and the other face portion paired in parallel. In other words, the third permanent magnet 42a and the fourth permanent magnet 42b bring the fifth face portions 425 and 425 or the sixth face portions 426 and 426 into contact with each other so as to be orthogonal to the center axis C, and are housed in the hole portion 35.

The surface layer portion 46 has an electric resistance value (Rt) which is twice or more as large as the electric resistance value (Rm) of these face portions 425 and 426 (Rt≥2×Rm), and extends over the entire surface of each of the face portion 425 and 426. The insulating properties of the fifth face portion 425 and the sixth face portion 426 are thereby enhanced.

As shown in FIG. 9, in the second embodiment, a coating film (hereinafter referred to as a coating film 46) is formed on each of the surfaces of the fifth face portion 425 and the sixth face portion 426 as the surface layer portion 46. In other words, in the example shown in FIG. 9, the coating films 36 are formed on both the fifth face portion 425 and the sixth face portion 426 paired in each of the permanent magnets 42a and 42b, respectively.

However, the coating film 46 may be formed on only one of the fifth face portion 425 and the sixth face portion 426 paired in each of the permanent magnets 42a and 42b. FIG. 10 shows, as an example, a form in which the coating film 46 is formed only on the sixth face portion 426. In the example shown in FIG. 10, the decrease in the magnet volume due to the coating film 46 with respect to the volume of the hole portion 35 can easily be suppressed as compared with the example shown in FIG. 9. In this case, the coating films 46 of the magnets need only to be in contact with each other in the state of being housed in the hole portion 35. Alternatively, as the embodiment, both the permanent magnets 32a and 32b in the form shown in FIG. 9 and the form shown in FIG. 10 may be mixed and applied but, in this case, too, the coating films 46 of the magnets need only to be in contact with each other in the state of being housed in the hole portion 35.

The same forming method as that for the coating film 36 can be applied as the method of forming the coating film 46. The thickness of the coating film 46 may be set in the same manner as the coating film 36.

In addition, the material of the coating film 46 may be a material having an electric resistance value which enables the effect of reduction in eddy current loss in the permanent magnets 42a and 42b to be increased to approximately 90%, i.e., an electric resistance value which is twice or more as large as the electric resistance value of the face portion (as an example, the sixth face portion 426) where the coating film 46 is formed. For example, a material containing germanium (Ge) or silicon (Si) can be applied as the material of the coating film 46, similarly to the coating film 36. Incidentally, the permanent magnets 42a and 42b may be constituted by containing, for example, iron (Fe), cobalt (Co), yttrium (Y), lanthanum (La), cerium (Ce), praseodymium (Pr), neodymium (Nd), samarium (Sm), and the like in a part or all parts of raw materials.

Thus, according to the second embodiment, even when the plurality of permanent magnets 42a and 42b are mixed in one hole portion 35, face portions (as an example, the sixth face portions 426) which are the contact portions of the adjacent magnets in the hole portion 35 can be appropriately insulated similarly to the first embodiment. Therefore, the eddy current generated in the permanent magnets 42a and 42b can be suppressed and the torque characteristics of the rotating electric machine 1 and the like can be improved.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiment described herein may be made without departing from the spirit of the invention. The accompanying claims and their equivalents are intended to cover such forms or modifications as would fall within the scope and spirit of the inventions.

For example, in each of the above-described embodiments, the coating films 36 and 46 are formed on the first face portion 321 and the second face portion 322 or the fifth face portion 425 and the sixth face portion 426 as the surface layer portions, but, instead of these or in addition to these, modified portions may be formed on the surfaces of these face portions 321, 322, 425, and 426. In other words, modified parts having an electric resistance value which is twice or more as large as the electric resistance values of these face portions 321, 322, 425, and 426 may be generated as surface layer portions by surface modification of the first and second face portions 321 and 322 or the fifth and sixth face portions 425 and 426. The reduction in eddy current loss which occurs in the permanent magnets 32a, 32b, 42a, and 42b can also be attempted even by the surface layer portions.

In addition, in each of the above-described embodiments, the permanent magnets 32a, 32b, 42a, and 42b are rectangular parallelepiped hexahedrons as an example of polyhedrons, but the magnet form is not limited to this. For example, a quadrangular prism having a trapezoidal cross-sectional shape on a plane orthogonal to the center axis C, a polyhedron having a C-shaped cross-sectional shape, or the like, can also be applied as a magnet form. The applicable polyhedron may have any corners chamfered.

### Reference Signs List

1... Rotating electric machine, 2... Stator (stator), 3... Rotor (rotor), 30... Rotating shaft (shaft), 31... Rotor core, 32a... First permanent magnet, 32b... Second permanent magnet , 35... Hole portion, 42a... Third permanent magnet, 42b... Fourth permanent magnet, 321, 421... First face portion, 322, 422... Second face portion, 323, 423... Third face portion, 324, 424... Fourth face portion, 325, 425... Fifth face portion, 326, 426... Sixth face portion, 36, 46... Coating film, C... Center axis.

## Claims

1. A rotating electric machine rotor, comprising:
a shaft rotating about a center axis;
a rotor core coaxially fixed to the shaft; and
a polyhedral permanent magnet, a plurality of polyhedral permanent magnets being housed in each hole portion that penetrates the rotor core in a direction along the center axis,
the permanent magnet having a face portion at which adjacent magnets are able to be in contact with each other in the hole portion in which the permanent magnets are housed,
the face portion comprising a surface layer portion having an electric resistance value which is twice or more as large as an electric resistance value of the face portion of the permanent magnet.

2. The rotating electric machine rotor of claim 1, wherein
the permanent magnet is the polyhedron including corner portions or the polyhedron having any corner portions chamfered and comprises a surface layer portion having an electric resistance value equivalent to the surface layer portion on the face portion comprising the surface layer portion and another face portion parallel to and paired with the face portion on the polyhedron.

3. The rotating electric machine rotor of claim 1 or 2, wherein
the face portion extends parallel to a magnetization direction of the permanent magnet.

4. The rotating electric machine rotor of claim 1, wherein
the surface layer portion is a coating film formed of a material such as germanium or silicon, on a surface of the face portion.

5. The rotating electric machine rotor of claim 1, wherein
the surface layer portion is a modified part generated by modifying a surface of the face portion.

6. A rotating electric machine comprising:
a stator including a stator core and a wire wound around the stator core; and
the rotor of claim 1.
